# FASCICULE DE BREVET EUROPEEN

(11) **EP 3 506 110 B1**
(45) Date de publication et mention de la délivrance du brevet: **16.03.2022**
(21) Numéro de dépôt: 18248082.2
(22) Date de dépôt: 27.12.2018
(51) Int. Cl.: G06F 12/08, G06F 16/176, G06F 12/14

(54) **ACCÈS MULTIPLES À UN FICHIER DE DONNÉES STOCKÉ DANS UN SYSTÈME DE STOCKAGE DE DONNÉES ASSOCIÉ À UN ESPACE MÉMOIRE TAMPON**
MEHRFACHZUGRIFF AUF EINE DATEI, DIE IN EINEM DATENSPEICHERSYSTEM IN VERBINDUNG MIT EINEM PUFFERSPEICHER GESPEICHERT IST
MULTI-ACCESS TO A DATA FILE STORED IN A DATA STORAGE SYSTEM RELATED TO A BUFFER MEMORY

(30) Priorité: 27.12.2017 FR 1763285
(43) Date de publication de la demande: 03.07.2019
(73) Titulaire: BULL SAS, 78340 Les Clayes sous Bois (FR)
(72) Inventeur: GERPHAGNON, Jean-Olivier, 38450 Vif (FR); SAUNIER, Frédéric, 38360 Sassenage (FR); PICHON, Grégoire, 38180 Seyssins (FR)
(74) Mandataire: Argyma

(56) Documents cités:
- EP-A2- 0 278 312
- EP-A2- 1 473 632
- WO-A1-98/22892

## Description

La présente invention concerne de manière générale le domaine du génie logiciel, et plus particulièrement l'amélioration de l'accès par une pluralité de processus à des données d'un seul et même fichier de données stocké dans un système de stockage de données persistant, ledit système de stockage de données persistant étant associé à un espace mémoire tampon. La présente invention permet notamment des accès multiples et concurrents audit fichier de données. L'invention peut être mise en œuvre dans les applications du calcul haute performance (en anglais « High Performance Computing » ou HPC), plus particulièrement en relation avec le stockage des fichiers distribués dans les calculateurs.

### [Art antérieur]

Le calcul haute performance, aussi appelé HPC (High Performance Computing en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en œuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés nœuds) interconnectés par un réseau d'interconnexion pouvant réaliser des opérations communes. Les clusters sont constitués d'un grand nombre de nœuds (typiquement plusieurs milliers), ces derniers étant interconnectés, par exemple de façon hiérarchique, par des commutateurs et chaque nœud est par exemple un serveur, un ordinateur ou plus généralement une machine. Ces clusters gèrent également une multitude de fichiers où plusieurs tâches d'une même application accèdent simultanément à un même fichier depuis un seul nœud de calcul. Une solution a notamment été décrite dans la demande de brevet internationale WO 98/22892 décrivant un procédé pour fournir un contrôle distribué pour le stockage structuré de données mis en œuvre par un système de mémoire partagée permettant notamment de partager des données et de les répliquer de manière cohérente, d'allouer et accéder à des parties de l'espace mémoire partagé afin de créer et de manipuler un stockage structuré de données persistantes.

Les systèmes d'exploitation utilisent fréquemment un espace mémoire tampon (aussi appelé « page cache » en anglais), dans la mémoire vive d'un calculateur haute performance (CHP), pour stocker temporairement des portions des fichiers accédés par les applications. On parle de projections en mémoire des fichiers. Les accès en mémoire vive étant plus rapides que les accès aux mémoires du système de stockage persistant, ce procédé accélère les opérations ultérieures de lecture et d'écriture des fichiers par les processus lorsqu'elles se rapportent aux mêmes portions des fichiers.

Ainsi, lorsqu'une application effectue une opération d'écriture de données dans un fichier (appel système « write »), le système d'exploitation copie ces données depuis l'environnement d'exécution du processus dans l'espace mémoire tampon représentant la portion du fichier modifiée par l'application. La copie des données sur le système de stockage persistant, qui réalise l'écriture effective dans le fichier, n'est effectuée par le système d'exploitation qu'à posteriori, en dehors du contexte d'exécution de l'application. On parle de synchronisation de l'espace mémoire tampon avec le système de stockage persistant pour désigner cette opération.

Les données de l'espace mémoire tampon représentant des portions de fichiers sont gérées par le système d'exploitation. Elles restent présentes dans l'espace mémoire tampon tant que le système n'a pas besoin de libérer cet espace mémoire pour un autre usage. Cela permet de satisfaire plus rapidement de futurs accès à ces portions de fichier par un ou plusieurs processus de la machine. En effet, lorsqu'une application effectue une opération de lecture (appel système « read ») dans un fichier dont des données sont déjà présentes dans l'espace mémoire tampon, le système d'exploitation copie directement ces données depuis la mémoire tampon vers l'environnement d'exécution du processus sans accéder au système de stockage persistant.

Pour gérer l'espace mémoire tampon des fichiers, le système d'exploitation enregistre dans des descripteurs les portions de fichiers projetées en mémoire. Il s'agit spécifiquement de descripteurs de projection des portions de fichiers dans l'espace mémoire tampon, à ne pas confondre avec des descripteurs de fichiers, fonctionnellement et concrètement différents, qui sont utilisés dans certains systèmes d'exploitation comme les systèmes d'exploitation utilisés dans le domaine HPC. On rappelle que les systèmes d'exploitation utilisés dans les systèmes HPC sont généralement des systèmes UNIX comme par exemple Linux d'enregistrer, avec la granularité d'une page mémoire, les portions modifiées en mémoire ou bien en cours de synchronisation avec le système de stockage persistant 2.

Lorsque les données d'un des fichiers 211 et 212 sont accédées par plusieurs processus de la machine, un seul et unique descripteur est utilisé par le système d'exploitation pour identifier les portions du fichier éventuellement projetées en mémoire dans l'espace mémoire tampon 125.

Il s'ensuit que, lors d'accès multiples et concurrents à un fichier par plusieurs processus, le descripteur des projections en mémoire du fichier représente une ressource critique et un point potentiel de contention des entrées-sorties du système d'exploitation.

Par exemple, lorsque dix processus d'une même application écrivent tous leurs données dans des zones disjointes d'un même fichier, l'utilisation d'un seul descripteur de projections en mémoire tampon du fichier nécessite la synchronisation de l'accès aux informations du descripteur et la mise à jour de celles-ci par le système d'exploitation entre les dix processus. Plus le nombre de processus accédant au fichier est grand, plus la contention sur le descripteur de projections en mémoire tampon du fichier est importante, et plus l'impact sur la performance est notable.

Ainsi, il existe un besoin pour de nouvelles méthodes ou dispositifs permettant de s'assurer que le système informatique permettre des accès multiples et concurrents à un même fichier par plusieurs processus, notamment dans le cadre d'un cluster et de calculs hautes performances.

### [Problème technique]

L'invention a donc pour but de remédier aux inconvénients de l'art antérieur. En particulier, l'invention a pour but de proposer un procédé de gestion d'un espace mémoire associé à un système de stockage de données persistant d'une machine informatique capable de gérer des accès multiples et concurrents à un même fichier par plusieurs processus. Ledit procédé doit être rapide et simple à mettre en œuvre, avec un nombre réduit d'étapes. En outre, il doit pouvoir être adapté au fonctionnement d'un cluster.

L'invention a également pour but de proposer un dispositif apte à mettre en œuvre un tel procédé. L'invention est définie par le jeu des revendications. Les revendications dépendantes définissent des modes de mises en oeuvre particuliers.

### [Brève description de l'inventionl

A cet effet, l'invention porte sur un procédé de gestion d'un espace mémoire tampon associé à un système de stockage de données persistant d'une machine informatique. Selon le procédé, l'espace mémoire tampon est adapté pour mémoriser temporairement en mémoire vive de la machine, un ensemble de portions d'un seul et même fichier de données du système de stockage de données persistant et selon lequel les portions de l'ensemble ont fait l'objet d'accès antérieurs par un ou plusieurs processus exécutés sur la machine. Conformément à la présente invention, le procédé comprend les étapes suivantes mises en œuvre par un système d'exploitation de la machine :
- le traçage de chacune des portions du fichier projetées dans l'espace mémoire tampon par un descripteur associé déterminé, ledit descripteur associé appartenant à une pluralité de descripteurs de projection en mémoire tampon qui sont tous associés, chacun au suivi d'un sous-ensemble de l'ensemble de portions du fichier projetées dans l'espace mémoire tampon ;
- le traitement d'une demande d'accès à une portion du fichier par un processus exécuté sur la machine, en utilisant le descripteur de projection en mémoire tampon associé à ladite portion de fichier pour identifier si ladite portion du fichier est projetée dans l'espace mémoire tampon.

Ainsi, le traitement de plusieurs opérations sur des projections en mémoire de portions disjointes du même fichier peut être réalisé simultanément à partir de descripteurs de projection en mémoire tampon respectifs. Ces opérations comprennent, notamment, le chargement-déchargement des pages projetées en mémoire, le marquage des pages modifiées, la synchronisation entre l'espace mémoire tampon et le système de stockage. Ces exemples d'opérations ne sont pas limitatifs.

Grâce à l'invention, la performance des opérations d'entrée-sortie sur un fichier sera significativement améliorée lors d'accès soutenus et concurrents par plusieurs processus. Cette situation est un cas d'usage classique des applications de Calcul Haute Performance, dans lesquelles plusieurs tâches d'une même application accèdent simultanément à un même fichier depuis un seul nœud de calcul.

Un deuxième aspect de l'invention concerne un dispositif de traitement de données comprenant des moyens pour mettre en œuvre les étapes du procédé de gestion conforme à l'invention décrite. Un tel dispositif peut avantageusement faire partie intégrante d'un système de calculateur à haute performance. Ainsi, selon un autre aspect, l'invention concerne un système de calculateur à haute performance comportant une pluralité de nœud de calcul, ledit système comprenant un dispositif de traitement de données selon l'invention au niveau d'au moins un de ses nœuds de calcul.

Dans un troisième aspect, l'invention a également pour objet un produit programme d'ordinateur comprenant des instructions qui, lorsque le programme est exécuté par un ordinateur, conduisent celui-ci à mettre en œuvre les étapes du procédé selon l'invention.

Selon un quatrième et dernier aspect, l'invention concerne enfin un support d'enregistrement lisible par ordinateur comprenant des instructions qui, lorsqu'elles sont exécutées par un ordinateur, conduisent celui-ci à mettre en œuvre les étapes du procédé selon l'invention.

D'autres avantages et caractéristiques de l'invention apparaitront à la lecture de la description suivante donnée à titre d'exemple illustratif et non limitatif, en référence aux Figures annexées qui représentent :
- Figure 1, un schéma illustrant le suivi de la projection en mémoire tampon de portions de deux fichiers selon l'art antérieur, c'est-à-dire avec deux descripteurs respectifs
- Figure 2, un schéma fonctionnel d'une machine adaptée pour la mise en œuvre de modes de réalisation du procédé ; et,
- Figure 3, la Figure 4 et la Figure 5, des modes de mise en œuvre respectifs du procédé de l'invention.

### [Description de l'inventionl

Par « machine informatique », on entend au sens de l'invention un ensemble de structures informatiques (i.e. dispositifs informatiques) ou de machines aptes à faire fonctionner un ou plusieurs processus. La machine informatique peut être un serveur ou comporter une pluralité de dispositifs. De façon préférée, la machine informatique est un nœud de calcul d'un calculateur à haute performance. D'un point de vue structurel, la machine peut être divisée en une pluralité de baies (« Rack » en anglais). La totalité ou la majorité des baies sont des baies de calcul ou des baies de stockage de données. Des baies de stockage de données comprennent les disques de stockage de données constituant un système de stockage physique, sur lequel est monté un système de fichiers (en anglais « File System », ou FS), comme par exemple GPFS (« General Parallel File System »), qui permet le stockage distribué de fichiers sur un grand nombre de supports physiques, pouvant dépasser le millier.

L'expression « calculateur haute performance » (CHP) au sens de l'invention correspond à un ensemble de ressources informatiques, i.e. des ressources matérielles et des ressources logicielles, lesquelles permettent l'exécution de tâches de calcul ou le stockage de données numériques. Ces ressources comprennent par exemple, et de manière non limitative : des composants électroniques de calcul rapides (par exemple des processeurs multicœurs ou des cartes graphiques dédiées au calcul scientifique de dernière génération), de la mémoire vive, et des équipements de stockage de masse (ou mémoires secondaires), en particulier des disques durs en grande quantité. Tous ces équipements sont associés à un système d'exploitation (OS, de l'anglais « Operating System »). D'un point de vue fonctionnel, un CHP est une machine qui agrège les équipements/ressources ci-dessus pour former un cluster de calcul.

Le système d'exploitation est par exemple Windows (marque enregistrée), ou plus fréquemment UNIX (marque enregistrée) ou l'une de ses déclinaisons comme Linux (marque enregistrée). Un logiciel s'exécute sur cet OS, qui est conçu pour assurer la gestion globale des ressources matérielles en tirant profit de leurs potentialités en termes de performance, notamment en exploitant le parallélisme et en rendant transparente la distribution desdites ressources.

Un système de fichiers, ou système de gestion de fichiers (SGF), est une façon de stocker les informations et de les organiser dans des fichiers stockés dans les mémoires secondaires. Une telle gestion des fichiers permet de traiter et de conserver des quantités importantes de données ainsi que de les partager entre plusieurs programmes informatiques, ou processus ou encore applications utilisateurs, qui les utilisent. Il offre à chaque utilisateur une vue abstraite sur ses données et permet de les localiser à partir d'un chemin d'accès. On notera que, dans l'absolu, il existe d'autres façons d'organiser les données, par exemple les bases de données (notamment des bases de données relationnelles) et les fichiers indexés.

On notera qu'on appelle « fichier », au sens d'un système d'exploitation tel que Linux et dans le contexte de la présente description, les fichiers pour lesquels le système d'exploitation fait usage de la mémoire tampon, par exemple :
- les fichiers de données (par exemple /home/toto/fichier.txt), et
- les dossiers (par exemple /home/toto).

Par « accès aux données d'un fichier », on entend des entrées/sorties de données dans, ou à partir du fichier, respectivement. Ce sont des opérations d'écriture ou de lecture de données dans le fichier qui sont réalisées par des appels système write ou read, respectivement. Plus largement, cela correspond aux actions nécessaires pour accéder à un fichier sur un support de stockage local, ou en le téléchargeant ou par diffusion directe (streaming), depuis un stockage distant, via un protocole web ou un accès à une base de données. Il s'agit en général d'un chemin d'accès au fichier précédé éventuellement d'un protocole d'accès (comme http://, file://).

On entend par « couplé », au sens de l'invention, connecté, directement ou indirectement avec un ou plusieurs éléments intermédiaires. Deux éléments peuvent être couplés mécaniquement, électriquement ou liés par un canal de communication.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « opération exécutable », au sens de l'invention, une action effectuée par un dispositif ou un processeur sauf si le contexte indique autrement. Les exemples d'opérations exécutables incluent, mais sans s'y limiter, «traiter», «déterminer», «afficher» ou autre. À cet égard, les opérations se rapportent à des actions et / ou des processus d'un système de traitement de données, par exemple un système informatique ou un dispositif informatique électronique similaire, qui manipule et transforme les données représentées en tant que quantités physiques (électroniques) dans les mémoires du système informatique ou d'autres dispositifs de stockage, de transmission ou d'affichage de l'information.

Les termes ou expressions « application », « logiciel », « code de programme », et « code exécutable » signifient toute expression, code ou notation, d'un ensemble d'instructions destinées à provoquer un traitement de données système pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

Dans la suite de la description, les mêmes références sont utilisées pour désigner les mêmes éléments.

La description de modes de réalisation de l'innovation sera donnée ci-après en référence à un exemple d'application à un Calculateur Haute Performance (CHP), comprenant au moins un nœud de calcul. Le nœud de calcul peut disposer d'un service de mémoire distribuée, par exemple un système de fichiers distribué. Cette situation est un cas d'usage classique des applications de Calcul Haute Performance, où plusieurs tâches d'une même application accèdent simultanément à un même fichier depuis un seul nœud de calcul. Cet exemple n'est cependant pas limitatif, l'innovation pouvant s'appliquer à d'autres systèmes de traitement de données.

Dans ce cas, l'utilisation d'un seul descripteur de projections en mémoire d'un fichier nécessite la synchronisation de l'accès aux informations du descripteur et de la mise à jour de celles-ci par le système d'exploitation entre les différents processus accédant au fichier. Cela entraine une contention importante sur le descripteur et un impact significatif sur la performance du système.

L'utilisation de multiples descripteurs de projections en mémoire du fichier selon l'invention permettra au système d'exploitation de traiter les opérations des différents processus à partir de descripteurs différents, supprimant ainsi le besoin de synchronisation des informations à ce niveau.

Le procédé de l'innovation est mis en œuvre par le système d'exploitation qui s'exécute sur le nœud de calcul. Le nœud de calcul se présente classiquement sous la forme d'un serveur composé d'un processeur, de mémoire, éventuellement de stockage local, et d'une carte réseau pour la communication avec les autres nœuds du calculateur..

Un nœud de calcul d'un calculateur haute performance comprend différents types de mémoire.

Premièrement, il y a de la mémoire vive, ou RAM (de l'anglais « *Random Access Memory* » qui signifie mémoire à accès aléatoire). Les accès en lecture et écriture dans la mémoire vive sont rapides. Par exemple, la bande passante moyenne est de 12 GB/s pour des mémoires RAM en technologie DDR3. Par contre, cette mémoire est non persistante après arrêt du système et coupure de l'alimentation électrique.

En plus de cette mémoire vive, il y a deuxièmement de la mémoire persistante, ou et de stockage de masse, qui dans les calculateurs CHP est généralement composée des disques de stockage de masse magnétiques HDD (de l'anglais « *Hard Disc Drive* » qui désigne des disques durs) ou tout autre technologie de stockage de masse persistant comme SDD ('Solid State Drive » les disques de stockage de masse électroniques), NVRAM (« Non-volatile random-access memory » des mémoires RAM non volatiles), NVME (« Non volatile memory express » des supports de stockage non volatiles express). A l'inverse de la première, cette deuxième mémoire est persistante après arrêt et coupure de l'alimentation électrique. Mais elle est comparativement très lente. Par exemple la bande passante maximum est de 600 MB/s en technologie SAS2.0, et généralement de 100 MB/s en technologie RAID.

Chaque type de mémoire, vive et persistante, correspond à des usages propres pour la gestion des données et l'exécution des processus s'y rapportant. En particulier, le système d'exploitation charge en mémoire RAM toutes les informations stockées dans le système de stockage dont les processeurs ont besoin pour assurer le fonctionnement des applications. Une fois les opérations réalisées par les processeurs, les informations en résultant et qui doivent être conservées sont copiées depuis la mémoire RAM dans le système de stockage persistant.

La ressource globale constituée par ces deux types de mémoire est également mise à profit de façon croisée : d'un côté, la mémoire persistante est utilisée pour soulager la mémoire vive lorsque celle-ci doit gérer une quantité importante de données pour opérer un calcul ; et en outre, d'un autre côté, la mémoire vive peut également être utilisée pour accélérer l'accès à la mémoire persistante. Dans le premier cas en effet, si on manque de mémoire RAM installée alors on utilise un espace défini sur les disques durs (bien que ceux-ci soient relativement plus lents) en secours, *i.e.,* en plus de la mémoire vive, selon une technique connue sous le nom de « *swap* ». Par exemple, le système d'exploitation Linux provisionne à cet effet de l'espace mémoire sur les disques durs, cet espace étant appelé « mémoire swap ». Dans le second cas, à l'inverse, et contrairement à la logique qui voudrait que lorsqu'une application a fini de s'exécuter, la mémoire RAM qu'elle utilisait soit libérée afin d'être disponible à l'utilisation par d'autres applications, un système d'exploitation comme Linux utilise une partie de la mémoire RAM comme un espace de mémoire tampon (en anglais « *buffer memory* »).

En effet, comme il a été dit ci-dessus, un disque dur est environ cent fois (100×) plus lent que la RAM. C'est pourquoi un espace mémoire tampon dans la RAM est utilisé dans le cadre des accès aux disques durs du système de stockage. Linux place dans cet espace mémoire tampon toutes les données en attente d'écriture sur le disque, cette écriture étant réalisée lors d'une opération de synchronisation qui groupe l'écriture de plusieurs pages mémoire. Par ailleurs, les données lues sur un disque sont conservées dans la mémoire tampon afin d'améliorer les performances du système. Sont également conservées en mémoire tampon des informations comme, par exemple, les droits sur les fichiers, la position des blocs libres sur les disques, ... En bref, il peut s'agir de toutes les informations utiles pour augmenter les performances du système dans ses interactions avec les périphériques tels que les disques durs en vue d'accéder ultérieurement à des données de portions de fichiers qui sont stockés dans le système de stockage persistant. Dit autrement, la mémoire tampon sert à accélérer, grouper et anticiper les accès aux disques durs du système de stockage persistant.

Le noyau (« *kernel* » en l'anglais) du système d'exploitation du CHP gère les ressources de la machine et permet aux différents composants, qu'ils soient matériels ou logiciels, de communiquer entre eux. Diverses abstractions de la notion d'application sont fournies par le noyau aux développeurs de programmes utilisateur. La plus courante est celle de processus (ou tâche). Le noyau du système d'exploitation n'est en lui-même pas une tâche, mais un ensemble de fonctions pouvant être appelées par les différents processus pour effectuer des opérations requérant un certain niveau de privilèges. Le noyau prend alors en général le relais du processus pour rendre le service demandé et lui rend le contrôle lorsque les actions correspondantes ont été réalisées.

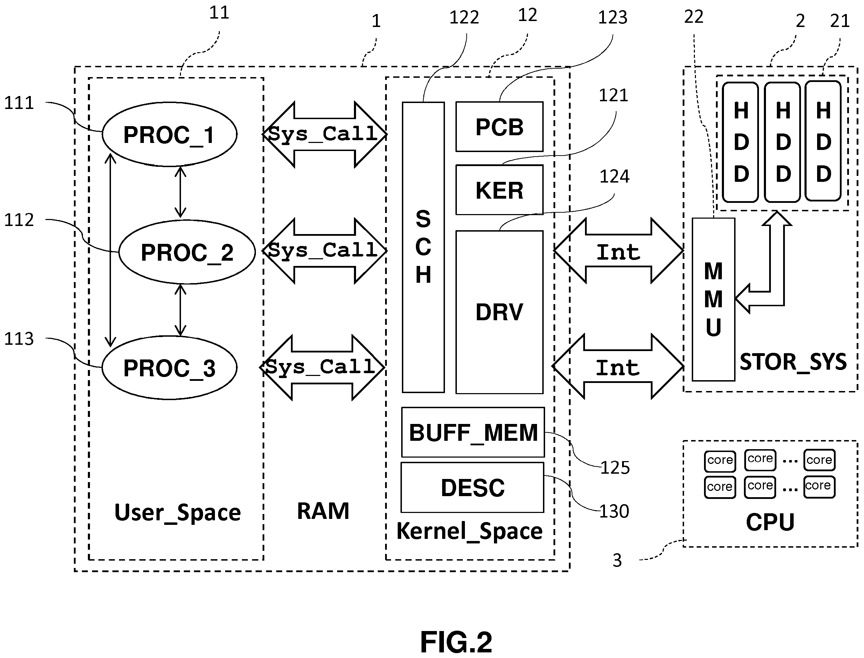

En référence au schéma fonctionnel de la **Figure 2****,** l'existence d'un noyau 121 présuppose une partition virtuelle de la mémoire vive 1 (RAM) en deux régions disjointes. L'une de ces régions correspond à l'espace utilisateur 11 et est réservée aux applications, c'est-à-dire aux programmes utilisateur qui sont chargés depuis le système de stockage de masse 2 dans la mémoire vive 1 pour être exécutés par une unité centrale de calcul 3 (ou CPU, de l'anglais « Central processing unit »). L'unité 3 comprend en général un ensemble de cœurs de processeurs, en grand nombre dans un CHP. L'autre région forme l'espace noyau 12 et est réservée à l'exécution du noyau.

En effet, le noyau 121 du système d'exploitation est lui-même un logiciel, qui s'exécute en mode superviseur dans l'espace noyau 12 de la mémoire vive 1. La division de l'espace mémoire 1 en un espace utilisateur 11 et un espace noyau 12 simplifie le travail des développeurs de programmes d'application, notamment en raison de la mise en œuvre du paradigme de la pagination mémoire sur lequel on reviendra plus loin.

Le noyau 121 fournit des mécanismes d'abstraction du matériel, notamment de la mémoire, du (ou des) processeur(s), et des échanges d'informations entre logiciels et périphériques matériels. Le noyau autorise aussi diverses abstractions logicielles et facilite la communication entre les processus. Cependant, il ne peut utiliser lui-même tous les mécanismes d'abstraction qu'il fournit aux autres logiciels.

Le noyau offre ses fonctions, à savoir l'accès aux ressources matérielles qu'il gère, au travers des appels système SYS_CALL. Les appels système sont des fonctions, appelées depuis un programme d'application, *i.e.,* un processus lors de son exécution. A la Figure 2, on a représenté trois processus, respectivement 111, 112 et 113, qui sont chargés dans l'espace utilisateur 11 de la mémoire vive 1 en vue de leur exécution. Les appels système sont traités dans l'espace noyau 12, et un retour est fourni au programme appelant dans l'espace utilisateur 11.

Un cœur de processeur est capable d'exécuter un seul processus, un système multiprocesseurs et/ou multicœurs est capable d'exécuter autant de processus qu'il a de cœurs de processeur. Les noyaux multitâches permettent même l'exécution de plusieurs processus sur un processeur, en partageant le temps du processeur entre ces processus, alternativement.

Grâce à la partition de la mémoire vive 1 entre espace utilisateur 11 et espace noyau 12 de la mémoire vive 1, les applications de l'espace utilisateur 11 ne peuvent, que ce soit par accident ou intentionnellement, accéder à une zone mémoire ne leur appartenant pas. Une telle action déclenche immédiatement une trappe du noyau, qui envoie un signal particulier au programme pour, généralement, y mettre fin.

Le noyau 121 fonctionne avec un autre composant logiciel de l'espace noyau 12, à savoir l'ordonnanceur 122 (« *scheduler* » en anglais) du noyau du système d'exploitation. L'ordonnanceur affecte l'exécution des processus 111, 112 113 aux différents cœurs de processeurs de l'unité centrale de traitement 3 de la machine CHP. L'ordonnanceur 122 exécute une procédure d'ordonnancement qui affecte les processus à exécuter aux différents cœurs de processeur disponibles, selon des règles déterminées (en fonction par exemple de priorités respectivement associées aux différents processus).

Si un nouveau processus doit être exécuté par un cœur de processeur qui traitait jusque-là un autre processus qui n'est pas encore terminé, un changement de contexte a lieu. C'est une opération consistant à sauvegarder le contexte d'exécution de l'ancien processus, ledit contexte d'exécution comprenant notamment l'état des registres du processeur au moment du changement. Cette sauvegarde utilise une structure de données 123 appelée bloc de contrôle de processus (ou PCB, de l'anglais « *process control block* »). Ultérieurement, le système d'exploitation restaure le contexte d'exécution de l'ancien processusqui a provisoirement été suspendue, laquelle reprend alors son exécution là où elle s'était arrêtée précédemment, soit sur le même processeur une fois qu'il est de nouveau disponible, soit sur un autre processeur disponible le cas échéant.

Du point de vue matériel, le système de stockage 2 est une mémoire de masse formée d'une ou plusieurs mémoires secondaires comme des disques durs magnétiques, des disques durs de type SSD (de l'anglais « *solid-state drive* » qui signifie disque à semiconducteurs à l'état solide), des supports optiques numériques, etc., ou toute combinaison de ces composants de stockage de données. Dans les applications de Calcul Haute Performance, le système de stockage comprend généralement un nombre important de disques durs, pouvant atteindre et même dépasser le millier.

Il existe des couches d'abstraction de matériel (ou HAL, de l'anglais « *Hardware Abstraction Layer* ») qui permettent de présenter la même interface à l'espace utilisateur 11 et simplifient ainsi le travail des développeurs d'applications. Dans les systèmes de type UNIX, l'abstraction utilisée est le système de fichier. Les primitives open, close, read et write sont présentées au système d'exploitation par les processus s'exécutant dans l'espace utilisateur 11 pour accéder aux périphériques, notamment aux mémoires formant le système de stockage persistant. En outre, le noyau 121 du système d'exploitation transmet ou interprète les informations à destination ou en provenance, respectivement, des ressources matérielles, notamment l'ensemble 21 de supports mémoires du système de stockage 2 (*i.e.,* les disques durs), via des interruptions INT. C'est ce que l'on appelle les entrées et sorties dans les fichiers, ou encore les accès aux fichiers.

La mémoire persistante du système de stockage de données obéit au principe de la pagination pour les accès par les applications et par le système d'exploitation.

Selon ce principe, la mémoire physique est divisée en blocs ou cadres (« *frames* » en anglais) de taille fixe. Dans un exemple, les blocs ont une taille égale à 512 octets. Leurs adresses physiques ne sont pas connues par les processus. D'un autre côté, la zone mémoire allouée à chaque processus est divisée, du point de vue logique, en pages qui sont en général de la même taille que les blocs, ou d'une taille correspondant à un multiple de taille de blocs. Dans un exemple, les pages mémoire ont une taille égale à 4096 octets. Dit autrement, les pages de la mémoire du système de stockage persistant correspondent, dans cet exemple non limitatif, à huit blocs de données dans le système de stockage. Les processus connaissent les adresses logiques des pages de la mémoire auxquelles ils peuvent accéder. La mise à disposition d'espace mémoire par le noyau pour une application se fait par exemple avec la granularité d'une page, mais cela est transparent pour l'application.

La taille des pages, en nombre d'octets, est une puissance entière de 2. On peut donc séparer le codage d'une adresse logique en deux parties : d'une part un numéro de page/bloc codé par les bits de poids le plus fort de l'adresse, et d'autre part un décalage (« *offset* » en anglais) codé par les bits de poids le plus faible de l'adresse qui permet de localiser les différents octets de la page sur le support physique. Les processeurs possèdent chacun un registre dédié contenant l'adresse (physique) d'une table de correspondance, qui est une table évolutive établissant la correspondance entre adresses logiques et adresses physiques. La table de correspondance d'adresse est modifiée lors d'un changement de contexte : changement de processus exécuté par le processeur, ou passage du mode user au mode kernel.

**L'espace mémoire tampon** obéit aussi au principe de la pagination tel que décrit ci-dessus, à ceci près que seul le système d'exploitation peut accéder aux pages de cet espace mémoire. Dans un exemple, les pages ou blocs de la mémoire tampon du nœud de calcul du calculateur HPC ont une taille égale à 8192 octets. Dit autrement, les pages de l'espace mémoire tampon correspondent, dans cet exemple non limitatif, à seize blocs de données dans le système de stockage, et à deux pages mémoires dans ledit espace.

On notera que, avantageusement, la mise en œuvre de l'invention s'adapte à la granularité de l'espace mémoire tampon qui résulte de l'organisation de la mémoire propre au système d'exploitation. Ceci est obtenu en définissant les descripteurs de la projection des portions de fichiers dans l'espace mémoire tampon en fonction de la taille des pages mémoire dans la mémoire tampon. Dit autrement, la mise en œuvre de l'invention ne nécessite pas de modifier la taille des pages dans l'espace mémoire tampon, qui reste déterminée par les spécifications du système d'exploitation seulement.

En informatique, un **descripteur de fichier** est une clé abstraite pour accéder à un fichier. Dans un système Unix, les descripteurs de fichier peuvent désigner des fichiers, des répertoires, des fichiers spéciaux, des pipes nommés, ou des pipes anonymes. Ce sont généralement des nombres entiers, à savoir des indexes d'entrées dans une structure de données du noyau du système d'exploitation. Cette structure de données contient les détails de tous les fichiers ouverts. Dans le système d'exploitation POSIX, par exemple, on appelle cette structure de données une table de descripteurs de fichier. Chaque processus peut avoir sa propre table de descripteurs de fichier. L'application utilisateur passe la clé abstraite au noyau par un appel système, et le noyau accède au fichier grâce à cette clé. L'application utilisateur ne peut pas lire ou écrire directement la table des descripteurs de fichier.

L'Homme du métier appréciera, cependant, que les descripteurs dont il est question dans les modes de réalisation de l'invention ne sont pas des descripteurs de fichier au sens ci-dessus. En effet, chacun des descripteurs dont il est question est un descripteur des projections dans l'espace mémoire tampon de portions d'un fichier qui est stocké dans la mémoire de stockage. Ils sont organisés, par exemple, sous la forme d'une liste chaînée.

Les descripteurs de projection dans la mémoire tampon sont utilisés lors de deux types d'opérations. Premièrement, lors d'une opération d'entrée/sortie dans le fichier qui est déclenchée par un processus, pour savoir si la portion du fichier concernée par cette opération est déjà mémorisée dans l'espace mémoire tampon. Deuxièmement, à l'initiative du système d'exploitation lors des opérations d'entretien général, afin, par exemple, de synchroniser les portions d'un fichier dans la mémoire tampon avec les données du fichier correspondant dans le système de stockage, libérer de l'espace dans la mémoire tampon, nettoyer les pages dont le contenu a été modifié dans l'espace tampon pour les écrire sur un disque du système de stockage persistant, etc.

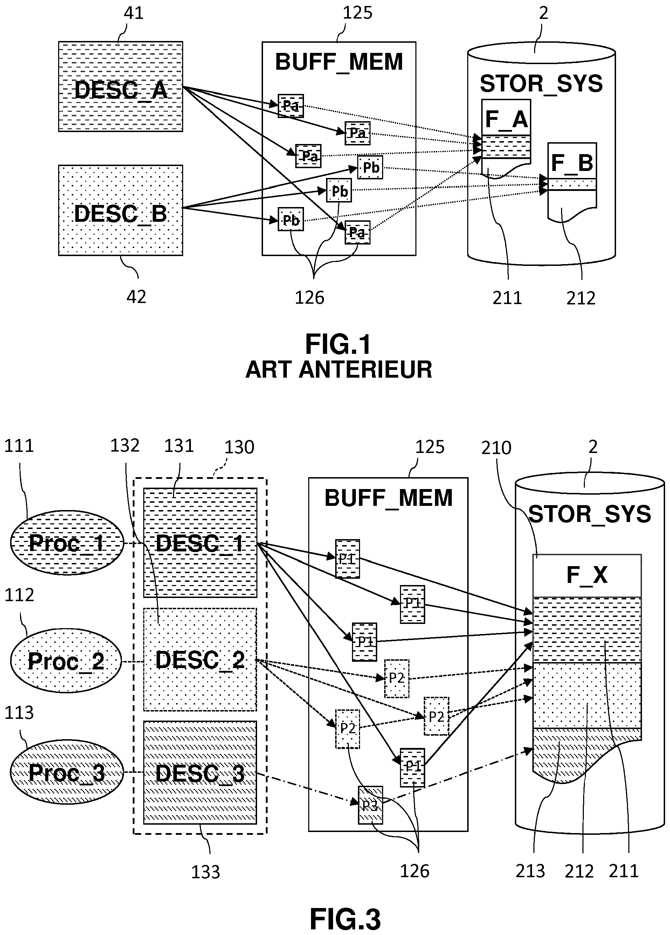

En principe, et comme illustré par le schéma de la Figure 1 déjà décrite dans le préambule de la présente description, il y a un descripteur par fichier du système de stockage persistant dont une ou plusieurs portions, ou un ensemble de portions, sont projetées dans l'espace mémoire tampon. Ainsi, même si les données d'un fichier sont accédées par plusieurs processus distincts de la machine, un seul et unique descripteur est utilisé par le système d'exploitation pour identifier les portions du fichier projetées en mémoire dans l'espace tampon. L'inconvénient est que, lors d'accès multiples et concurrents à un fichier par plusieurs processus distincts, ce descripteur unique des projections en mémoire du fichier représente un point potentiel de contention des entrées-sorties du système d'exploitation. Ceci pénalise la performance d'accès aux données.

C'est pourquoi, contrairement à l'art antérieur décrit en introduction en référence au schéma de la Figure 1, les modes de réalisation de l'invention comprennent l'utilisation, non pas d'un seul, mais de plusieurs descripteurs de projection en mémoire tampon. Ces descripteurs multiples ont pour fonction de tracer (i.e. suivre) l'espace mémoire tampon occupé par les différentes portions d'un seul et même fichier qui sont projetées dans l'espace mémoire tampon. Le fait qu'il y ait plusieurs descripteurs pour suivre ces différentes projections de portions du même fichier a pour effet que, en cas d'accès concurrents par différents processus s'exécutant en parallèle sur la machine, on élimine ou du moins on réduit la contention sur chaque descripteur de projection en mémoire tampon. L'attribution à chaque descripteur, parmi cette pluralité de descripteurs de projection en mémoire tampon, du suivi des portions d'un unique fichier qui sont projetées dans l'espace mémoire tampon, peut être réalisée selon différents modes de mise en œuvre.

En référence au schéma de la **Figure 3****,** selon une première mise en œuvre cette association est réalisée en fonction des processus 111, 112 et 113 qui ont initialement accédé aux différentes portions 126 du fichier 210 avec pour effet que ces portions du fichier 126 ont été projetées dans l'espace mémoire tampon. On a donc un descripteur par processus.

Plus particulièrement, la pluralité 130 de descripteurs de projection en mémoire tampon comprend à chaque instant autant de descripteurs qu'il y a de processus exécutés sur la machine ayant accédé à des portions du fichier 126 qui sont projetées dans l'espace mémoire tampon 125. Dans l'exemple représenté, il y a trois processus 111, 112 et 113, donc il y a trois descripteurs de projection en mémoire tampon 131, 132 et 133, respectivement.

D'un point de vue fonctionnel, chacun des descripteurs de la pluralité 130 de descripteurs de projection en mémoire tampon trace la (ou les) portion(s) du fichier projetée(s) dans l'espace mémoire tampon qui ont été accédées pour la première fois par l'un respectif desdits processus, lorsque ces portions 126 ont été projetées en mémoire tampon 125.

En pratique, l'association de l'un des descripteurs 131, 132 et 133 parmi la pluralité 130 de descripteurs de projection en mémoire tampon à une portion du fichier quand ladite portion du fichier est projetée dans l'espace mémoire tampon est fonction du processus exécuté sur la machine qui a requis l'accès à ladite portion du fichier. Le nombre des descripteurs peut ainsi évoluer si le nombre de processus accédant à des portions du même fichier 210 du système de stockage persistant 2 évolue au cours du temps.

Dans un mode de mise en œuvre, lorsqu'une portion du fichier est projetée dans l'espace mémoire tampon en raison de l'accès à ladite portion du fichier 210 par un processus en cours d'exécution sur la machine pour lequel la pluralité de descripteurs de projection en mémoire ne comprend aucun descripteur de projection en mémoire tampon associé, un nouveau descripteur de projection en mémoire tampon est créé. Et ce descripteur est associé au suivi de la projection dans l'espace mémoire tampon de toutes les portions du fichier 210 qui sont accédées par ledit processus, ainsi bien entendu qu'aux portions du fichier qui seront ultérieurement encore accédées par ce même processus.

Dans ce mode de mise en œuvre, un descripteur de projection en mémoire tampon est supprimé dès lors que, en raison des procédures de libération de l'espace mémoire tampon, plus aucune portion du fichier associée au processus associé n'est présente dans l'espace mémoire tampon.

Cette première mise en œuvre a l'avantage d'être basée sur les processus, ce qui donne les meilleures performances en termes de rapidité d'accès par lesdits processus aux portions du fichier projetées dans l'espace mémoire tampon 2. En effet, chaque requête d'accès en lecture ou en écriture à des portions du fichier, *i.e.* chaque appel système read ou write, respectivement, contient un identifiant du processus appelant. Il est donc aisé de déterminer, sur la base de cet identifiant, quel descripteur de projection en mémoire tampon va permettre, le cas échéant, d'accéder à la (ou aux) portion(s) du fichier qui sont éventuellement projetées dans l'espace mémoire tampon 125.

Par contre, l'Homme du métier appréciera qu'il puisse être préférable de faire en sorte que les portions du fichier projetées en mémoire tampon 2 qui sont suivies par des descripteurs respectifs tels que les descripteurs 131, 132 et 133 représentés, c'est-à-dire les portions du fichier 210 qui sont utilisées par les processus 111, 112 et 113, respectivement, appartiennent à des zones mémoire disjointes dans le système de stockage, respectivement 211, 212 et 213 dans l'exemple représenté. En effet, ceci permet de s'assurer que des portions du fichier ne peuvent pas être modifiées, le cas échéant, par deux processus différents si ces deux processus y accèdent en même temps (ou plutôt si un second processus accède à une portion du fichier qui a été modifiée par un premier processus avant que la projection en mémoire tampon de cette portion modifiée du fichier n'ait été synchronisée dans le système de stockage avant d'être à nouveau projetée dans l'espace mémoire tampon par l'appel système initié par ledit second processus). A défaut de telle précaution, il existe un risque de corruption des données du fichier 210. Pour l'éviter, des politiques adéquates de gestion de l'espace mémoire dans le système de stockage peuvent être mises en œuvre (impliquant éventuellement des déplacements et/ou duplications de données). On peut aussi gérer des priorités d'accès aux différentes zones du fichier 210 dans le système de stockage 2 par les différents processus actifs. Ces politiques sont à la portée de l'Homme du métier, et leur description sortirait du cadre de la présente description.

D'autres modes de mise en œuvre, qui vont maintenant être présentées, ne présentent pas l'inconvénient de la première mise en œuvre décrite dans ce qui précède.

Dans ces modes de mise en oeuvre, correspondant à l'invention revendiquée, l'attribution à une portion du fichier projetée dans l'espace mémoire tampon d'un descripteur parmi la pluralité de descripteurs de projection en mémoire tampon n'est pas fonction du processus ayant initié l'appel système qui cause la projection de ladite portion du fichier dans la mémoire tampon. Au lieu de cela, cette attribution est réalisée en fonction d'un index se rapportant à la portion considérée du fichier. Par index, on entend ici une référence permettant d'identifier la portion considérée du fichier au sein d'une série d'unités mémoire à laquelle cette portion du fichier appartient.

L'association à l'un des descripteurs déterminés parmi la pluralité de descripteurs de projection en mémoire tampon existants peut être avantageusement réalisée en fonction de l'index des octets du fichier dans le système de stockage. La complexité de l'association provient du fait que la pluralité de descripteurs de projection en mémoire tampon existants est une pluralité évolutive en ce sens qu'il peut être créé un nouveau descripteur à l'occasion de la projection d'une nouvelle portion du fichier dans l'espace mémoire tampon par un processus qui n'y était pas encore représenté par un descripteur associé.

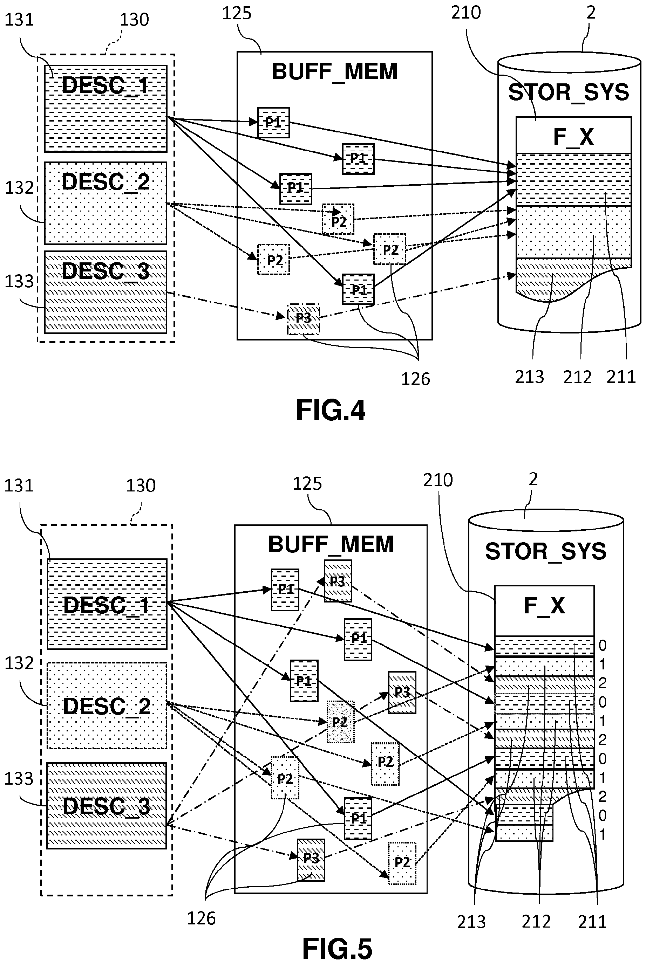

Dans ce qui suit, et en référence aux schémas des Figures 4 et 5, on va décrire deux exemples de politiques de découpage qui sont des exemples non limitatifs. D'autres politiques peuvent en effet être utilisées, selon les spécificités de chaque application du procédé.

En référence au schéma de la **Figure 4****,** le découpage du fichier 210 et la distribution des portions de fichier 126 correspondantes à la pluralité 130 de descripteurs de projection en mémoire tampon peuvent tout d'abord être réalisés par zones consécutives du fichier 210. Ainsi, dans l'exemple représentés où il y a trois descripteurs, les portions 211, 212 et 213 du fichier 210 dont les index sont par exemple de 0 à N-1, sont suivies par le descripteur 111, les portions du fichier dont les index sont de N à 2*N-1 sont suivies par le descripteur 112, et les portions du fichier dont les index sont de 2*N à 3*N-1 sont suivies par le descripteur 113. De manière générale les portions du fichier dont les indexes sont compris entre *i**N et (*i*+1)*N-1 sont suivies par le i-ième descripteur de projection en mémoire tampon.

La valeur de N détermine la taille de la zone de l'espace mémoire tampon associée à chaque descripteur de projection en mémoire tampon. Le choix de cette valeur N est un choix d'implémentation, qui peut avantageusement dépendre du profil d'accès des processus.

Avantageusement, ce mode de mise en œuvre ne présente pas l'inconvénient signalé plus haut à propos du mode de réalisation de la Figure 3. En effet, aucune corruption de données ne peut résulter de l'accès simultané à des portions de fichiers par des processus distincts via des descripteurs différents, puisque chaque descripteur suit la projection en mémoire tampon de zones bien déterminées du fichier 210 dans le système de stockage 2.

On notera que le nombre de descripteurs n'est pas limité dans le mode de réalisation de la Figure 4, puisqu'il dépend, outre de la valeur de N, de la taille du fichier 210 qui n'est pas connue *a priori.* Ceci peut ne poser aucun problème particulier dans la plupart des applications, mais peut aussi être un inconvénient dans certaines applications puisqu'il n'est pas possible de réserver à l'avance la taille de la mémoire requise dans l'espace noyau pour mémoriser la structure de données correspondant à la pluralité 130 de descripteurs de projection en mémoire tampon. Cette structure de données est en général une liste chaînée, laquelle sera donc forcément de longueur variable et inconnue à l'avance.

Le mode de mise en œuvre de la **Figure 5****,** pallie cet inconvénient, tout en conservant les avantages précités des réalisations du procédé selon la Figure 4. Dans ce mode de mise en œuvre, en effet, le découpage du fichier 210 et la distribution des portions de fichier 126 correspondantes aux descripteurs de projection en mémoire tampon est réalisé par zones entremêlées Dans ce cas, le nombre de descripteurs est fixe, par exemple égal à M, où M est un nombre entier. Dans l'exemple représenté, M est égal à trois (M=3). Les index dont le reste de la division par le nombre M de descripteurs vaut *i* sont suivis par le *i*-ième descripteur de projection en mémoire tampon. L'avantage est que le nombre total de descripteurs de projection en mémoire tampon est fixe, et connu nativement par le système d'exploitation. Ce mode de mise en œuvre est plus facile à implémenter que celui de la Figure 4 décrit plus haut, dans lequel le nombre de descripteurs est indéfini.

Par contre, l'efficacité de cette mise en œuvre est limitée quant au nombre d'accès concurrents qui peuvent être supportés. En effet, puisque le nombre de descripteurs de projections du fichier dans l'espace mémoire tampon est limité à M, le nombre de processus pouvant réaliser, sans souffrir d'éventuelles contentions, des accès simultanés et concurrents à l'espace mémoire tampon est également limité à M. En pratique, le choix du nombre M est là-encore un choix d'implémentation laissé à l'appréciation de l'Homme du métier en fonction des spécificités de l'application.

L'Homme du métier appréciera que, quel que soit le mode de mise en œuvre retenu, l'intérêt de l'innovation tient principalement à la diminution de la contention lors du suivi des portions d'un fichier projetées en mémoire tampon, et à la parallélisation possible du traitement des opérations sur les projections en mémoire tampon du fichier.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé de gestion d'un espace mémoire tampon (125) associé à un système de stockage de données persistant (2) d'une machine informatique, ledit espace mémoire tampon étant adapté pour mémoriser temporairement en mémoire vive (1) de la machine un ensemble de portions (126) d'un seul et même fichier de données (210) du système de stockage de données persistant, lesdites portions ayant respectivement fait l'objet d'accès antérieurs par un ou plusieurs processus (111,112,113) exécutés sur la machine informatique,
le procédé comprenant les étapes suivantes mises en œuvre par un système d'exploitation de la machine :
- l'association d'un descripteur déterminé parmi une pluralité de descripteurs de projection en mémoire tampon à une portion du fichier quand ladite portion du fichier est projetée dans l'espace mémoire tampon, ladite association étant fonction de l'index des octets du fichier dans le système de stockage, où un index est une référence permettant d'identifier la portion considérée du fichier au sein d'unités mémoire à laquelle la portion du fichier appartient, et où le découpage du fichier (210) et la distribution des portions de fichier (126) correspondantes à la pluralité (130) de descripteurs de projection en mémoire tampon est réalisé par association de M zones entrelacées (211,212,213) du fichier (210) respectivement à M descripteurs de projection en mémoire tampon (131,132,133), où M est un nombre entier déterminé.
- le traçage de chacune des portions du fichier projetées dans l'espace mémoire tampon par le descripteur associé déterminé (131,132,133), ledit descripteur associé appartenant à la pluralité (130) de descripteurs de projection en mémoire tampon qui sont tous associés, chacun au suivi d'un sous-ensemble de l'ensemble de portions du fichier projetées dans l'espace mémoire tampon;
- le traitement d'une demande d'accès à une portion du fichier par un processus exécuté sur la machine, en utilisant le descripteur de projection en mémoire tampon associé à ladite portion de fichier pour identifier si ladite portion du fichier est projetée dans l'espace mémoire tampon.

2. Procédé selon la revendication 1, dans lequel le découpage du fichier (210) et la distribution des portions de fichier (126) correspondantes à la pluralité (130) de descripteurs de projection en mémoire tampon (131,132,133) est réalisé par zones (211,212,213) du fichier (210) de taille fixe et consécutives dans un des espaces de représentation du fichier du système de stockage persistant (2).

3. Procédé selon la revendication 1, **caractérisé en ce que** les indexes dont le reste d'une division par le nombre M de descripteurs vaut i sont suivis par le i-ième descripteur de projection en mémoire tampon.

4. Procédé selon l'une quelconque des revendications 1 à 3, **caractérisé en ce que** la machine informatique est un nœud de calcul d'un calculateur à haute performance.

5. Dispositif de traitement de données comprenant des moyens pour mettre en œuvre les étapes de la méthode selon l'une quelconque des revendications 1 à 4.

6. Système de calculateur à haute performance comportant une pluralité de nœuds de calcul, **caractérisé en ce qu'**il comprend un dispositif de traitement de données selon la revendication 5 au niveau d'au moins un de ses nœuds de calcul.

7. Produit programme d'ordinateur comprenant des instructions qui, lorsque le programme est exécuté par un ordinateur, conduisent celui-ci à mettre en œuvre les étapes de la méthode selon l'une quelconque des revendications 1 à 4.

8. Support d'enregistrement lisible par ordinateur comprenant des instructions qui, lorsqu'elles sont exécutées par un ordinateur, conduisent celui-ci à mettre en œuvre les étapes de la méthode selon l'une quelconque des revendications 1 à 4.

## Patentansprüche

1. Verfahren zur Verwaltung eines einem nichtflüchtigen Datenspeichersystem (2) einer Rechenmaschine zugeordneten Pufferspeicherraums (125), wobei der Pufferspeicherraum dazu geeignet ist, dass darin eine Menge von Abschnitten (126) ein und derselben Datendatei (210) des nichtflüchtigen Datenspeichersystems vorübergehend in einem Direktzugriffsspeicher (1) der Maschine gespeichert wird, wobei auf die Abschnitte jeweils zuvor durch einen oder mehrere auf der Rechenmaschine ausgeführte Prozesse (111, 112, 113) ein Zugriff erfolgte,
wobei das Verfahren die folgenden von einem Betriebssystem der Maschine ausgeführten Schritte umfasst:
- Zuordnen eines bestimmten Deskriptors aus einer Vielzahl von Pufferspeicherprojektionsdeskriptoren zu einem Dateiabschnitt, wenn der Dateiabschnitt in den Pufferspeicherraum projiziert wird, wobei das Zuordnen von dem Byte-Index der Datei in dem Speichersystem abhängt, wobei ein Index ein Verweis ist, der das Identifizieren des betreffenden Dateiabschnitts innerhalb von Speichereinheiten ermöglicht, zu denen der Dateiabschnitt gehört, und wobei das Teilen der Datei (210) und das Verteilen der entsprechenden Dateiabschnitte (126) auf die Vielzahl (130) von Pufferspeicherprojektionsdeskriptoren durch das jeweilige Zuordnen von M verschachtelten Bereichen (211, 212, 213) der Datei (210) zu M Pufferspeicherrprojektionsdeskriptoren (131, 132, 133) erfolgt, wobei M eine bestimmte ganze Zahl ist.
- Nachverfolgen eines jeden der in den Pufferspeicherraum projizierten Dateiabschnitte durch den bestimmten zugeordneten Deskriptor (131, 132, 133), wobei der zugeordnete Deskriptor zu der Vielzahl (130) von Pufferspeicherprojektionsdeskriptoren gehört, die jeweils zum Verfolgen einer Untermenge der Menge von in den Pufferspeicherraum projizierten Dateiabschnitten zugeordnet sind;
- Verarbeiten einer Zugriffsanforderung auf einen Dateiabschnitt durch einen auf der Maschine ausgeführten Prozess, wobei der dem Dateiabschnitt zugeordnete Pufferspeicherprojektionsdeskriptor zum Bestimmen, ob der Dateiabschnitt in den Pufferspeicherraum projiziert ist, verwendet wird.

2. Verfahren nach Anspruch 1, wobei das Teilen der Datei (210) und das Verteilen der entsprechenden Dateiabschnitte (126) auf die Vielzahl (130) von Pufferspeicherprojektionsdeskriptoren (131, 132, 133) durch aufeinderfolgende Bereiche (211, 212, 213) der Datei (210) mit einer festen Größe in einem der Dateidarstellungsräume des nichtflüchtigen Speichersystems (2) erfolgt.

3. Verfahren nach Anspruch 1, **dadurch gekennzeichnet, dass** den Indizes, deren Rest einer Division durch die Anzahl M der Deskriptoren i ist, der i-te Pufferspeicherprojektionsdeskriptor folgt.

4. Verfahren nach einem der Ansprüche 1 bis 3, **dadurch gekennzeichnet, dass** die Rechenmaschine ein Rechenknoten eines Hochleistungsrechners ist.

5. Datenverarbeitungsvorrichtung, umfassend Mittel zum Ausführen der Schritte des Verfahrens nach einem der Ansprüche 1 bis 4.

6. Hochleistungsrechnersystem, umfassend eine Vielzahl von Rechenknoten, **dadurch gekennzeichnet, dass** es an mindestens einem seiner Rechenknoten eine Datenverarbeitungsvorrichtung nach Anspruch 5 umfasst.

7. Computerprogrammprodukt, umfassend Anweisungen, die bei der Ausführung des Programms durch einen Rechner diesen dazu veranlassen, die Schritte des Verfahrens nach einem der Ansprüche 1 bis 4 auszuführen.

8. Computerlesbares Speichermedium, umfassend Anweisungen, die bei ihrer Ausführung durch einen Rechner diesen dazu veranlassen, die Schritte des Verfahrens nach einem der Ansprüche 1 bis 4 auszuführen.

## Claims

1. A method for managing a buffer memory space (125) associated with a persistent data storage system (2) of a computing machine, said buffer memory space being suitable for temporarily storing in the RAM (1) of the machine a set of portions (126) of a single and the same data file (210) of the persistent data storage system, said portions having respectively been previously accessed by one or more processes (111,112,113) executed on the computing machine,
the method comprising the following steps implemented by an operating system of the machine:
- the association of a determined descriptor among a plurality of buffer memory projection descriptors with a portion of the file when said portion of the file is pojected into the buffer memory space, said association being a function of the index of the bytes of the file in the storage system, wherein an index is a reference making it possible to identify the considered portion of the file within memory units to which the portion of the file belongs, and where the partitioning of the file (210) and the distribution of the portions of file (126) matching the plurality (130) of projection descriptors in buffer memory is carried out by associating M interleaved zones (211,212,213) of the file (210) respectively with M projection descriptors in buffer memory (131,132,133), where M is a determined integer.
- the tracing of each of the portions of the file projected into the buffer memory space by the determined associated descriptor (131,132,133), said associated descriptor belonging to the plurality (130) of projection descriptors in buffer memory that are all associated, each tracking a subset of the set of portions of the file projected into the buffer memory space;
- the processing of a request for access to a portion of the file by a process executed on the machine, using the projection descriptor in buffer memory associated with said portion of file to identify whether said portion of the file is projected into the buffer memory space.

2. The method according to claim 1, wherein the partitioning of the file (210) and the distribution of the file portions (126) matching the plurality (130) of projection descriptors in buffer memory (131,132,133) is carried out by zones (211,212,213) of the file (210) of fixed size and consecutive in one of the file representation spaces of the persistent storage system (2).

3. The method according to claim 1, **characterized in that** the indexes whose remainder of a division by the number M of descriptors equals i are followed by the i-th projection descriptor in buffer memory.

4. The method according to any one of claims 1 to 3, **characterized in that** the computing machine is a computing node of a high-performance computer.

5. A data processing device comprising means for implementing the steps of the method according to any one of claims 1 to 4.

6. A high-performance computing system having a plurality of computing nodes, **characterized in that** it comprises a data processing device according to claim 5 at at least one of its computing nodes.

7. A computer program product comprising instructions which, when the program is executed by a computer, cause the latter to implement the steps of the method according to any one of claims 1 to 4.

8. A computer-readable storage medium having instructions which, when executed by a computer, cause the latter to implement the steps of the method according to any one of claims 1 to 4.
